# DEMANDE DE BREVET EUROPEEN

(11) **EP 1 239 242 A1**
(43) Date de publication de la demande: **11.09.2002**
(21) Numéro de dépôt: 02005980.4
(22) Date de dépôt: 23.06.2000
(51) Int. Cl.: F25C 3/04

(54) **Fixation d'accessoires sur le corps d'une vanne du type vanne d'alimentation d'un canon a neige**

(30) Priorité: 25.06.1999 FR 9908438
(62) Demande divisionnaire de: 00946008.0
(71) Demandeur: York Neige, 44980 Sainte-Luce sur Loire (FR)
(72) Inventeur: Dion, Jean-Francois, 44830 Brains (FR); Jouneau, Pierrick, 44119 Treillieres (FR)
(74) Mandataire: Catherine, Alain

(57) **Abrégé**

Le dispositif de fixation de pièces, accessoires ou autres éléments associés au corps de vanne, est constitué d'un système de clavetage transverse.

Ce système de clavetage comprend des clavettes (30) en forme d'aiguilles, lesquelles aiguilles sont diamétralement opposées dans des trous (29) du corps de la vanne, qui permettent auxdites aiguilles de coopérer avec une gorge (26) aménagée sur la partie cylindrique de la pièce ou accessoire ou élément associé.

Les clavettes (30) sont solidaires, formant une sorte de U susceptible d'être fixé sur le corps de la vanne par tout moyen approprié.

## Description

La présente invention concerne un système de fixation de pièces, d'accessoires ou d'éléments associés à un corps de vanne comme par exemple un corps de vanne d'alimentation d'un canon à neige.

Cette vanne comporte, dans un corps monobloc :
- un canal traversant qui constitue l'entrée du fluide et sert également de conduit de transit pour le fluide en question,
- un orifice de sortie du fluide, qui se situe au-dessus dudit canal,
- un orifice de purge qui se situe sous ledit canal,
- un forage cylindrique disposé selon un axe perpendiculaire à celui dudit canal, pour loger un tiroir qui est mobile sous l'effet d'un organe moteur, lequel tiroir est aménagé pour, dans un cas, mettre ledit canal en communication avec ladite sortie et pour, dans un autre cas, mettre cette dernière en communication avec ladite purge afin de vider le circuit de sortie du fluide.

Le dispositif d'alimentation d'un canon à neige comprend au moins une vanne, et en particulier une vanne dont le corps est aménagé au niveau des deux extrémités du canal de transit, de façon identique, pour permettre indifféremment l'accueil et la fixation soit d'accessoires variés comme des raccords, bouchons, ou autres, soit d'autres corps de vannes.

Cet aménagement du corps de la vanne permet ainsi de juxtaposer, selon les besoins, plusieurs corps formant une sorte de grappe compacte plus facile à installer qu'une multitude de vannes dans les abris ou autres, en bordure des pistes de ski par exemple.

Selon l'invention, la fixation des accessoires ou autres sur un corps de vanne s'effectue au moyen d'un système de clavetage transverse, lequel système comprend des clavettes du genre aiguilles qui sont diamétralement opposées, guidées dans des orifices du corps de la vanne, lesquelles aiguilles coopèrent avec une gorge aménagée sur la pièce accessoire et en particulier sur la périphérie d'une portion de cylindre qui s'emboîte dans l'alésage d'entrée dudit corps de la vanne.

Selon une autre disposition de l'invention, les orifices d'entrée et/ou de transit de la vanne, comportent un double alésage cylindrique, dont l'un, situé vers l'intérieur, permet d'assurer l'étanchéité avec la pièce ou l'élément associé, et l'autre, situé à l'entrée, permet la fixation au moyen du système de clavetage transverse.

Toujours selon l'invention, les clavettes sont reliées entre elles, formant une sorte de U qui est fixé sur le corps par tout moyen approprié et de préférence par une vis qui sert en même temps d'organe de blocage de la pièce accessoire par rapport au corps de la vanne.

Toujours selon l'invention, les accessoires susceptibles d'être associés au corps de la vanne peuvent consister en une douille de jonction et d'assemblage de deux corps mettant en communication le canal d'alimentation de chacun d'eux, ou encore consister en une douille-bouchon qui obture l'un des orifices du canal d'alimentation ou encore sépare deux corps, l'un pouvant être utilisé pour l'alimentation en eau alors que l'autre est utilisé pour l'alimentation en air du dispositif de pulvérisation.

Toujours selon l'invention, les accessoires peuvent également consister en des raccords pour se connecter sur les tubulures d'arrivée d'eau et d'air, lesquels raccords se présentent simplement sous la forme de douilles ou de Té ou encore de coudes, etc ...

L'invention sera encore détaillée à l'aide de la description suivante et des dessins annexés, donnés à titre indicatif et dans lesquels :
- la figure 1 montre schématiquement, en perspective, une vanne du dispositif d'alimentation selon l'invention ;
- la figure 2 montre, en coupe selon un plan vertical passant par l'axe du canal d'alimentation, le corps de la vanne et l'obturateur positionné dans ledit corps ;
- la figure 3 représente, en coupe selon un plan vertical passant par le canal de sortie, la vanne complète avec l'obturateur pour moitié dans une position totalement ouverte et pour moitié dans une position totalement fermée permettant la purge dudit canal de sortie ;
- la figure 4 montre le groupage de vannes entre elles ;
- la figure 5 montre d'une façon partielle l'assemblage d'un corps de vanne avec un accessoire ;
- la figure 6 montre les moyens de verrouillage d'un accessoire sur le corps de vanne et le corps de vanne muni de moyens de verrouillage d'un manchon sur l'orifice de sortie ;
- la figure 7 montre les possibilités de variation de la position angulaire des corps de vanne l'un par rapport à l'autre.

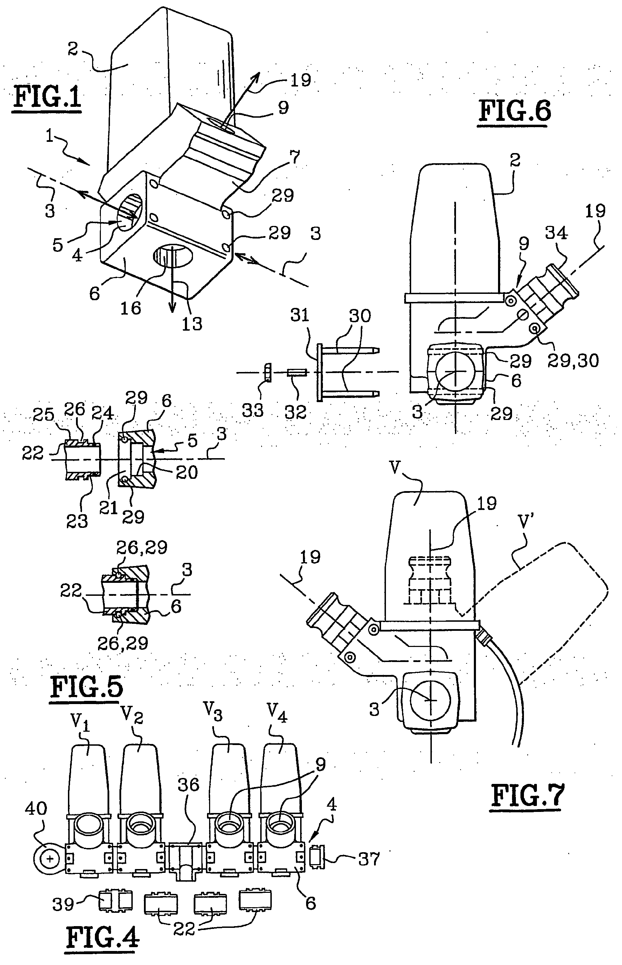

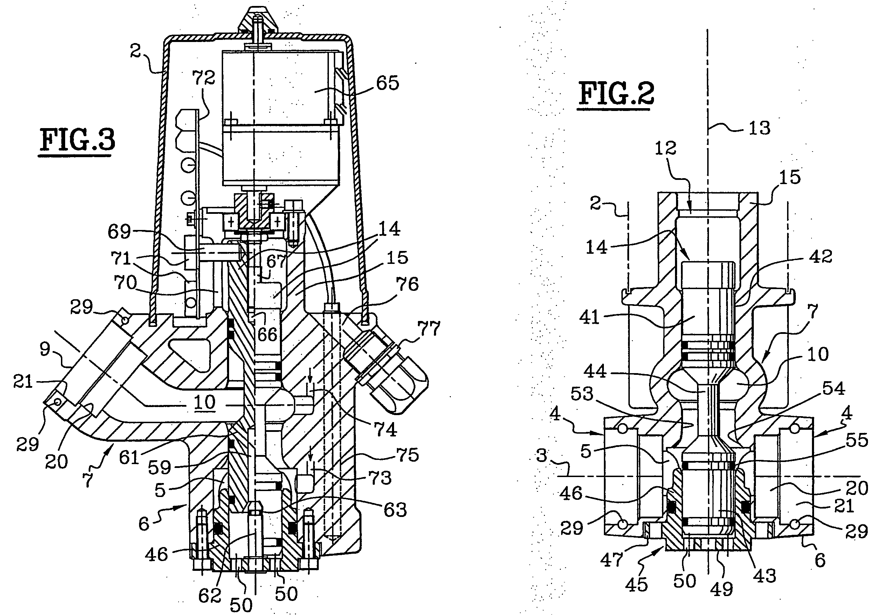

La vanne représentée schématiquement figure 1 comprend un corps 1 surmonté d'un capot 2. Le corps 1 est par exemple réalisé de façon monobloc, en alliage léger genre aluminium obtenu par moulage. Le capot est un capot en matériau plastique par exemple qui renferme comme détaillé plus loin, les mécanismes de manoeuvre et les circuits électriques. Ce capot 2 est monté et fixé de façon étanche sur le dessus du corps 1.

Le corps 1 comporte plusieurs orifices et canaux. On trouve, à sa partie inférieure, centrés sur l'axe 3, des orifices 4 situés de chaque côté du corps aux extrémités d'un canal 5 centré sur l'axe 3, lequel canal 5 constitue le canal d'alimentation ou d'entrée.

Les orifices 4 sont donc des orifices d'entrée mais également de transit, c'est-à-dire permettant l'alimentation d'un corps de vanne juxtaposé comme détaillé plus loin.

Ce canal d'entrée 5 se situe dans une sorte de bloc 6 en forme de parallélépipède qui constitue la partie inférieure du corps 1. Ce bloc 6 est surmonté d'un autre bloc 7 orienté perpendiculairement, qui comporte l'orifice de sortie 9 et renferme un conduit de sortie 10 qui apparaît figure 3.

Ces deux blocs 6 et 7 sont traversés par un forage transverse 12 centré sur un axe 13 perpendiculaire à l'axe 3 du canal 5 du bloc 6. Ce forage cylindrique 12 qui apparaît figures 2 et 3, permet de loger le tiroir 14 qui sera détaillé plus loin.

Ce forage cylindrique 12 s'étend au-dessus du bloc 7 dans une partie cylindrique 15 qui est logée à l'intérieur du capot 2.

La partie inférieure du bloc 6 comporte un orifice 16 qui correspond à l'orifice de purge. Cet orifice 16 se situe dans le prolongement du forage 12, à sa partie inférieure.

On remarque que l'orifice de sortie 9 situé dans le bloc 7, est centré sur un axe 19 qui fait un angle de l'ordre de 45° par rapport à l'axe 13, orienté vers le haut de la vanne. Cet axe 19 et le conduit de sortie 10, sont centrés dans un plan perpendiculaire à l'axe 3, passant par l'axe 13 du forage 12.

On observe sur la figure 1, la compacité de la vanne et son aptitude à former une sorte de module qui permet comme représenté figure 4, de créer un dispositif d'alimentation d'un canon à neige en regroupant plusieurs vannes V1, V2, V3, V4, afin de réaliser à partir d'une seule et même alimentation générale en eau et en air, une distribution d'eau et d'air à des pressions et débits choisis selon les besoins.

La juxtaposition des corps de vannes est permise au moyen d'un aménagement des orifices 4 situés de part et d'autre du bloc 6 de la vanne. Ces orifices 4 comportent un alésage interne 20 à l'extrémité du canal 5 et un alésage externe 21 à proximité de la face d'extrémité du bloc 6. Cet aménagement de l'orifice 4 permet d'accueillir des accessoires divers comme par exemple une douille 22 telle que représentée partiellement figure 5. Cette douille 22, de forme tubulaire, comporte à l'une de ses extrémités une portion de cylindre 23 muni d'un joint torique 24 qui coopère avec l'alésage interne 20 aménagé au niveau de l'orifice 4. Cette portion cylindrique 23 est suivie d'une seconde portion cylindrique 25 munie d'une gorge 26. Cette seconde portion cylindrique 25 coopère avec l'alésage externe 21 de l'orifice 4.

Cet alésage 21 comporte des trous 29, diamétralement opposés et parallèles entre eux, centrés dans un plan perpendiculaire à l'axe 3. Ces trous permettent le passage de clavettes 30 qui se présentent sous la forme d'aiguilles. Les orifices 29 débouchent dans l'alésage 21, permettant aux aiguilles 30 de se positionner dans la gorge 26 aménagée au niveau du cylindre 25 de l'accessoire 22, verrouillant cet accessoire dans l'orifice 4.

Comme représenté figure 6, les aiguilles 30 sont reliées entre elles par une barrette 31 qui permet de les immobiliser en position active au moyen - d'une vis 32 qui se loge dans le corps 1, dans un filetage approprié et - d'un écrou 33 qui serre l'ensemble. La vis 32 peut également permettre de verrouiller la position de l'accessoire 22 pour l'empêcher de tourner dans l'orifice 4, autour de l'axe 3.

Toujours figure 6, les aiguilles 30 sont représentées en face des trous 29 aménagés de part et d'autre de l'orifice 4 dans le bloc 6.

Cet aménagement des orifices 4 se retrouve de la même façon au niveau de la sortie 9 du corps 1. Aussi, les mêmes aiguilles 30 apparaissent en position normale de blocage d'un accessoire 34 constitué d'un raccord mâle positionné au niveau de la sortie 9 du corps.

La figure 7 fait apparaître, vues de côté, une vanne V représentée en traits forts et une seconde vanne V' couplée à la première, représentée en traits mixtes fins et inclinée par rapport à la première selon un angle de 30°. Cette possibilité de faire varier l'angle des axes de sortie 19 de chacune des vannes simplifie les connexions desdites vannes avec les tubulures d'alimentation du ou des canons à neige.

Cette possibilité de variation angulaire est toutefois limitée par la nécessité de conserver un écoulement gravitaire afin de purger le circuit de sortie.

La figure 4 montre plusieurs sortes d'accessoires qui permettent de grouper des vannes V1, V2, V3, V4 pour former un dispositif d'alimentation.

Ainsi, on trouve un accessoire 36 en forme de Té situé au milieu des deux groupes de vannes. Cet accessoire 36 permet d'alimenter les différentes vannes et en particulier les vannes V1, V2 situées à sa droite sur la figure et la vanne V3 de gauche.

Les corps du couple de vannes V1, V2, sont solidaires au moyen d'un accessoire 22 en forme de simple douille comme illustré figure 5. A l'extrémité, sur la vanne V2, on remarque la présence d'un accessoire 37 en forme de bouchon qui obture l'orifice 4 du corps 1 ; la vanne V2 est alimentée à travers la vanne V1.

La vanne V1 est fixée au Té 36 au moyen d'une douille 22 identique à celle qui est disposée entre les vannes V1 et V2.

La vanne V3 située à gauche du Té 36 sur la figure est également fixée à ce Té 36 au moyen d'une douille 22. La vanne V3 est alimentée en eau également à travers le Té 36.

La vanne V4 groupée avec les autres vannes, est utilisée pour contrôler le passage de l'air comprimé.

Cette vanne V4 est fixée sur la vanne V3 au moyen d'une douille bouchon 39 qui permet d'obturer un des orifices 4 de la vanne V3 et de la vanne V4 simultanément.

La vanne V4 est alimentée sur son côté gauche au moyen d'un accessoire 40 en forme de coude par exemple.

## Revendications

1. Système de fixation de pièces, accessoires ou éléments associés à une vanne du genre vanne d'alimentation pour canon à neige, **caractérisé en ce qu'**il consiste en un système de clavetage transverse, lequel système comprend des clavettes (30) en forme d'aiguilles, lesquelles aiguilles sont diamétralement opposées dans des trous (29) du corps de ladite vanne, permettant auxdites aiguilles de coopérer avec une gorge (26) aménagée sur la partie cylindrique correspondante de ladite pièce, ou accessoire ou élément associé.

2. Dispositif de fixation selon la revendication 1, **caractérisé en ce que** la vanne comporte des orifices d'entrée et/ou de transit comportant un double alésage cylindrique (20, 21) dont l'un, situé à l'intérieur, permet d'assurer l'étanchéité avec la pièce ou l'accessoire ou l'élément associé, et l'autre, situé à l'entrée, permet la fixation au moyen du système de clavetage transverse.

3. Dispositif de fixation selon l'une quelconque des revendications 1 ou 2, **caractérisé en ce que** les clavettes (30) sont solidaires, formant une sorte de U susceptible d'être fixé sur le corps par tout moyen approprié, en particulier par une vis (32).

4. Dispositif de fixation selon la revendication 3, **caractérisé en ce que** la vis (32) d'immobilisation des clavettes (30) réalise simultanément l'immobilisation par serrage de l'accessoire verrouillé par lesdites clavettes.

5. Dispositif de fixation selon l'une quelconque des revendications 1 à 4, **caractérisé en ce que** l'accessoire associable au corps (1) se présente soit sous la forme d'un bouchon (37), soit sous la forme d'une douille tubulaire (22) qui permet d'associer et de juxtaposer deux corps (1), soit sous la forme d'une douille bouchon (39) qui permet d'associer deux corps (1) tout en séparant les fluides de chaque corps, soit une pièce de raccordement en forme de Té (36) ou de douille (34) ou encore de coude (40).
